# EUROPÄISCHE PATENTANMELDUNG

(11) **EP 2 375 681 A1**
(43) Veröffentlichungstag der Anmeldung: **12.10.2011**
(21) Anmeldenummer: 11002713.3
(22) Anmeldetag: 31.03.2011
(51) Int. Cl.: H04L 29/06, H04M 3/42, H04W 8/26, H04L 29/12

(54) **Verfahren zur Erzeugung einer einheitlichen Nutzeridentität für die Kommunikation und Kommunikationsverfahren**

(30) Priorität: 06.04.2010 DE 102010013981
(71) Anmelder: Vodafone Holding GmbH, 40213 Düsseldorf (DE)
(72) Erfinder: Gehring, Volker, 41751 Viersen (DE); Rudovsky, Steffen, 41352 Korschenbroich (DE); Staufer, Tillmann, 40547 Düsseldorf (DE); Fidelius, Steffen, 41464 Neuss (DE)
(74) Vertreter: Müller, Thomas

(57) **Zusammenfassung**

Die vorliegende Erfindung betrifft insbesondere ein Verfahren zur Kommunikation in einem Kommunikationsnetzwerk, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist, das gekennzeichnet ist durch folgende Schritte: Aus einem Kommunikationsnetz ruft ein erster Teilnehmer über sein Endgerät die Telefonnummer eines dem Kommunikationsnetzwerk zugeordneten Endgeräts eines zweiten Teilnehmers an; Aus dem Kommunikationsnetz des ersten Teilnehmers wird eine IAM-Nachricht (IAM = Initial Adresse Message) mit der Nummer des ersten und des zweiten Teilnehmers an eine Gateway-Vermittlungsstelle gesendet; Die Gateway-Vermittlungsstelle sendet eine Datenbankabfrage an eine HLR-Datenbank des Kommunikationsnetzwerks des zweiten Teilnehmers, wobei in der Datenbankabfrage die Rufnummer des zweiten Teilnehmers angegeben ist; Eine Rechnereinheit des Kommunikationsnetzwerks überprüft anhand der in der Datenbankabfrage übermittelten Rufnummer des zweiten Teilnehmers das Nutzerprofil des zweiten Teilnehmers, insbesondere für welche Netzwerkdienste dieser berechtigt ist, und ob eine Anrufweiterschaltung auf ein Endgerät des zweiten Teilnehmers aktiviert ist; Basierend auf diesem Überprüfungsschritt sendet die Rechnereinheit des Kommunikationsnetzwerks eine Antwort auf die Datenbankabfrage an die Gateway-Vermittlungsstelle.

## Beschreibung

Die vorliegende Erfindung betrifft zunächst ein Verfahren zur Erzeugung einer einheitlichen Nutzeridentität für die Kommunikation in einem Mobilfunknetz und im Internet, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist. Weiterhin betrifft die Erfindung auch ein Verfahren zur Kommunikation in einem Kommunikationsnetzwerk, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist.

Prinzipiell ist das GSM/UMTS CS Netzwerk (CS = Circuit Switched) nicht in der Lage, Anrufe und Nachrichten aufzusplitten. Der Dienst ist somit mit Standardfunktionalität nicht abbildbar.

Eine im Versuch verwendete Lösung basierte darauf, den Versuchsteilnehmern eine IN-Kennzeichnung zu vergeben (insbesondere eine T-CSI = Terminating Call Subscriber Information)) und den gesamten eingehenden Sprach- und Video-Verkehr über eine IN-Plattform zu einem IMS-Applikationsserver (IMS = IP Multimedia Subsystem) zu leiten. Dieser Server machte dazu zwei Anruf-Legs in Richtung der Endeinrichtungen auf und kontrollierte den Anruf. Nachteil dieser Lösung ist, dass Kapazitäten (Media Gateways) verbraucht, auch wenn kein Client online ist. Weiterhin ist die Schaltung fehleranfällig. Fällt eines der Elemente (IN, IMS Domäne) aus, ist der vom Kunden als selbstverständlich erachtete Dienst ebenfalls vom Ausfall bedroht.

Die Rufweiterleitungen (die Call Forwardings - CFs) konnten im Versuch nicht vom als Mobiltelefon ausgestalteten Endgerät aus verwaltet werden. Um ein plausibles Verhalten des Systems bei Call Forwardings zu erreichen, mussten die CFs im CS Netz deaktiviert werden und ein Call Forwarding Management in der IMS-Domäne implementiert werden. Nachteil dabei ist, dass die CFs nur vom PC Client aus administriert werden konnten.

Ein weiteres Problem im Zusammenhang Kommunikationsnetzwerken, etwas Kommunikationsplattformen ist, dass diese Lösungen oftmals IMS basiert sind. IMS verlangt bei der Registrierung eines Clients einen öffentlichen Identifier (IMPU), eine private Identität (IMPI) und ein Passwort. Die IMPI ist mit der IMSI (International Mobile Subscriber Identity) vergleichbar und sollte dem Kunden nicht bekannt sein. Um nun die Nutzung von IMS Diensten von unterschiedlichen Clients aus zu nutzen, muss eine Lösung gefunden werden, mit der die IMPI sicher durch den Client abgeleitet beziehungsweise generiert werden kann.

Eine Lösung für das Abfangen und Kopieren von eingehenden SMS (Short Message Service) war bisher nicht bekannt. Eingehende MMS (Multimedia Messaging Service) wurden durch die Autocopy-Funktion des MMSC (Multimedia Messaging Service Center) dupliziert und an den Client, beispielsweise einen Computer, und an ein mobiles Endgerät, beispielsweise ein Mobiltelefon, versandt. Das Problem dabei ist, dass der Inhalt einer MMS nur einmal vom MMSC abgerufen werden kann, und dass dieser danach automatisch gelöscht wird.

Ausgehend hiervon liegt der vorliegenden Erfindung die Aufgabe zugrunde, ein Verfahren der eingangs genannten art derart weiterzubilden, dass die zuvor genannten Nachteile umgangen werden können.

Diese Aufgabe wird erfindungsgemäß gelöst durch das Verfahren mit den Merkmalen gemäß dem unabhängigen Patentanspruch 1 sowie durch das Kommunikationsverfahren mit den Merkmalen gemäß dem unabhängigen Patentanspruch 4. Weitere Merkmale und Details der Erfindung ergeben sich aus den Unteransprüchen und der Beschreibung, insbesondere auch aus den Zeichnungen und der dazugehörigen Figurenbeschreibung. Merkmale und Details, die im Zusammenhang mit dem Verfahren gemäß dem ersten Erfindungsaspekt beschreiben sind, gelten dabei selbstverständlich auch im Zusammenhang mit dem Verfahren gemäß dem zweiten Erfindungsaspekt, und jeweils umgekehrt, so dass in diesem Zusammenhang hinsichtlich der Offenbarung stets wechselseitig vollinhaltlich Bezug genommen wird.

Gemäß dem ersten Aspekt der Erfindung wird ein Verfahren zur Erzeugung einer einheitlichen Nutzeridentität für die Kommunikation in einem Mobilfunknetz und im Internet bereitgestellt, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist. Das Verfahren ist erfindungsgemäß dadurch gekennzeichnet, dass das Internet basierte zweite Endgerät unter derselben Identität erreichbar ist wie das erste Endgerät im Mobilfunknetz, so dass den Endgeräten eingehende Anrufe und Nachrichten mit derselben Identität signalisiert werden, und dass zur Bestimmung der Nutzeridentität aus einer dem Nutzer zugeordneten ersten Öffentlichen Identität (IMPU) eine Private Identität (IMPI) berechnet wird.

Mit dem erfindungsgemäßen Verfahren wird insbesondere eine einheitliche Kundenidentität für Kommunikationsdienste in einem Mobilfunknetz und im Internet ermöglicht. Insbesondere wird es ermöglicht, eingehende Anrufe und Nachrichten auf eine Kundenidentität, beispielsweise eine MSISDN (Mobile Subscriber ISDN Nummer), auf verschiedene Endgeräte versenden zu können.

Bei dem Kommunikationsnetzwerk kann es sich beispielsweise um eine Kommunikationsplattform handeln. Ein Endgerät kann beispielsweise ein Mobiltelefon sein. Das Internet basierte Endgerät kann beispielsweise ein Computer, etwa ein PC Client, sein. Im Folgenden wird die Erfindung zum besseren Verständnis des Öfteren anhand einer solchen Konstellation als vortielhafte Ausführungsform beschrieben, wobei die Erfindung nicht auf diese konkrete Konstellation beschränkt wäre.

Beispielsweise kann ein Software-Client für PCs bereitgestellt werden, der die mobilen Dienste, wie Sprache, Video, SMS und MMS und dergleichen, im Internet und auf dem PC zur Verfügung stellt.

Dazu kann vorteilhaft dieselbe Identität, beispielsweise eine MSISDN, wie im mobilen Netzwerk zur Verfügung stehen.

Der Nutzer kann nunmehr in die Lage versetzt werden, Telefonate zu führen und Nachrichten zu verschicken, uns zwar unter Nutzung seiner mobilen Identität, beispielsweise seiner MSISDN. Das heißt, die Kommunikationspartner bekommen diese als A-Party signalisiert.

Der PC-Client ist nunmehr erreichbar unter der MSISDN. Das heißt, ein einkommender Verkehr kann/soll auch an den Client ausgeliefert werden. Als Besonderheit kann dabei vorgesehen sein, dass eingehender Verkehr bei Bedarf auf dem mobilen Endgerät und dem PC-Client parallel ausgeliefert wird, so dass der Nutzer entscheiden kann, an welchem Gerät er den Anruf annimmt bzw. die Nachricht verarbeitet.

Für den Dienst kann der Nutzer nunmehr ein plausibles Verhalten bezüglich Call Forwardings haben. Dabei ist der Nutzer immer in der Lage, die Call Forwardings mit seinem Endgerät, beispielsweise einem Mobiltelefon zu verwalten.

Vorzugsweise basiert die Identität der Endgeräte auf einer dem Nutzer zugeordneten MSISDN basiert, wobei zur Bestimmung der Nutzeridentität aus einer dem Nutzer zugeordneten ersten Öffentlichen Identität (IMPU), die eine MSISDN basierte SIP Adresse darstellt, eine Private Identität (IMPI) berechnet wird.

In weiterer Ausgestaltung kann zur Bestimmung der Nutzeridentität aus einer dem Nutzer zugeordneten ersten Öffentlichen Identität (IMPU), die eine Benutzernamen basierte Öffentliche Identität darstellt, welche aus einem Register mit Öffentlichen Identitäten bezogen werden, eine Private Identität (IMPI) berechnet werden.

Ziel der Lösung gemäß diesem Erfindungsaspekt ist, dass Anrufe und Nachrichten des Nutzers beim Empfänger (etwa bei einer B-Party) - vorzugsweise mit der MSISDN - signalisiert werden. Gleichzeitig ist gewährleistet, dass sich der Nutzer von unterschiedlichen Clients einloggen kann, ohne die private Nutzer Identität kennen zu müssen.

Kern einer bevorzugten Ausführungsform dieser Lösung ist, dass der Nutzer als erste Öffentliche Identität eine MSISDN basierte SIP Adresse erhält und die Private Identität daraus berechnet wird.

Der Nutzer ist nunmehr über eine einheitliche Identität, beispielsweise Adresse, Rufnummer, oder andere Identität, auf verschiedenen von ihm genutzten Endgeräten, insbesondere gleichzeitig, erreichbar. Beispielsweise kann auf diese Weise eine MSISDN als Adresse auch mit ins Internet genommen werden.

Sollte der Nutzer über mehrere Endgeräte und/oder Nutzerschnittstellen, beispielsweise über Mobilstationen, Festnetz, PC Client, TV Gerät oder dergleichen erreichbar sein, kann dies identifiziert werden und die Benachrichtigung an einzelne oder alle Endgeräte und/oder Nutzerschnittstellen weitergeleitet werden.

Gemäß einem zweiten Aspekt der Erfindung wird ein Verfahren zur Kommunikation in einem Kommunikationsnetzwerk bereitgestellt, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist, insbesondere unter Verwendung einer gemäß einem wie vorstehend beschriebenen Verfahren nach dem ersten Erfindungsaspekt erzeugten einheitlichen Nutzeridentität, das durch folgende Schritte gekennzeichnet ist:
- Aus einem Kommunikationsnetz ruft ein erster Teilnehmer über sein Endgerät die Telefonnummer eines dem Kommunikationsnetzwerk zugeordneten Endgeräts eines zweiten Teilnehmers an;
- Aus dem Kommunikationsnetz des ersten Teilnehmers wird eine IAM-Nachricht (IAM = Initial Adresse Message) mit der Nummer des ersten und des zweiten Teilnehmers an eine Gateway-Vermittlungsstelle gesendet;
- Die Gateway-Vermittlungsstelle sendet eine Datenbankabfrage an eine HLR-Datenbank des Kommunikationsnetzwerks des zweiten Teilnehmers, wobei in der Datenbankabfrage die Rufnummer des zweiten Teilnehmers angegeben ist;
- Eine Rechnereinheit des Kommunikationsnetzwerks überprüft anhand der in der Datenbankabfrage übermittelten Rufnummer des zweiten Teilnehmers das Nutzerprofil des zweiten Teilnehmers, insbesondere für welche Netzwerkdienste dieser berechtigt ist, und ob eine Anrufweiterschaltung auf ein Endgerät des zweiten Teilnehmers aktiviert ist;
- Basierend auf diesem Überprüfungsschritt sendet die Rechnereinheit des Kommunikationsnetzwerks eine Antwort auf die Datenbankabfrage an die Gateway-Vermittlungsstelle.

Aus einem Kommunikationsnetz ruft ein erster Teilnehmer über sein Endgerät die Telefonnummer eines dem Kommunikationsnetzwerk zugeordneten Endgeräts eines zweiten Teilnehmers an. Beispielsweise kann vorgesehen sein, dass aus dem öffentlichen Fernsprechnetz (PSTN = Public Switched Telephone Network)) beziehungsweise dem öffentlichen terrestrischen Mobilfunknetz (PLMN = Public Land Mobile Network) ein erster Teilnehmer über sein Endgerät die Telefonnummer eines einem Kommunikationsportal zugeordneten zweiten Teilnehmers anruft.

Aus dem Kommunikationsnetz des ersten Teilnehmers wird eine IAM-Nachricht (IAM = Initial Adresse Message) mit der Nummer des ersten und des zweiten Teilnehmers an eine Gateway-Vermittlungsstelle gesendet. Beispielsweise kann vorgesehen sein, dass aus diesem Fernsprechnetz/Mobilfunknetz weine IAM-Nachricht (IAM = Initial Adresse Message) mit der Nummer des ersten und des zweiten Teilnehmers an die Gateway-Vermittlungsstelle (GMSC = Gateway Mobile Services Switching Center) gesendet wird.

Die Gateway-Vermittlungsstelle sendet eine Datenbankabfrage an eine HLR-Datenbank des Kommunikationsnetzwerks des zweiten Teilnehmers, wobei in der Datenbankabfrage die Rufnummer des zweiten Teilnehmers angegeben ist. Beispielsweise kann vorgesehen sein, dass die Gateway-Vermittlungsstelle (GMSC) eine Datenbankabfrage (MAP-SRI = Mobile Application Part - Sent Routing Info) an die HLR-Datenbank (HLR = Home location register) des Kommunikationsportals des zweiten Teilnehmers sendet, wobei in der Datenbankabfrage die Rufnummer des zweiten Teilnehmers angegeben ist.

Eine Rechnereinheit des Kommunikationsnetzwerks überprüft anhand der in der Datenbankabfrage übermittelten Rufnummer des zweiten Teilnehmers das Nutzerprofil des zweiten Teilnehmers, insbesondere für welche Netzwerkdienste dieser berechtigt ist, und ob eine Anrufweiterschaltung auf ein Endgerät des zweiten Teilnehmers aktiviert ist. Beispielsweise kann vorgesehen sein, dass eine Rechnereinheit (HSS = Home Subscriber Server) des Kommunikationsportals überprüft anhand der in der Datenbankabfrage übermittelten Rufnummer des zweiten Teilnehmers das Nutzerprofil des zweiten Teilnehmers, insbesondere für welche Netzwerkdienste dieser berechtigt ist und ob eine Anrufweiterschaltung auf ein Endgerät des zweiten Teilnehmers aktiviert ist.

Basierend auf diesem Überprüfungsschritt sendet die Rechnereinheit des Kommunikationsnetzwerks eine Antwort auf die Datenbankabfrage an die Gateway-Vermittlungsstelle. Hierzu sind verschiedene Ausgestaltungen denkbar, die nachfolgend in größerem Detail beschrieben werden.

Beispielsweise kann in dem Fall, dass im Überprüfungsschritt ermittelt wird, dass keine Anrufweiterschaltung auf ein Endgerät des zweiten Teilnehmers aktiviert ist, der Antwort eine abschließende Information zu dem Anruf des ersten Teilnehmers zugesandt werden, so dass der Anruf des ersten Teilnehmers in das Kommunikationsnetz des zweiten Teilnehmers weitergeleitet wird. Beispielsweise sendet die Rechnereinheit (HSS) des Kommunikationsportals eine Antwort auf die Datenbankabfrage an die Gateway-Vermittlungsstelle (GMSC), wobei der Antwort eine abschließende Information zu dem Anruf des ersten Teilnehmers zugesandt wird (T-CSI = Terminating Call Subscriber Information), so dass der Anruf des ersten Teilnehmers in das Mobilfunknetz des zweiten Teilnehmers weitergeleitet wird.

In weiterer Ausgestaltung kann vorgesehen sein, dass in dem Fall, dass im Überprüfungsschritt ermittelt wird, dass eine Anrufweiterschaltung auf ein Endgerät des zweiten Teilnehmers aktiviert ist, der Antwort eine Information über den abgesendeten Anruf des ersten Teilnehmers zugesandt wird, zusammen mit einer IMRN und dem Leistungsmerkmal, dass die Anrufweiterschaltung des zweiten Teilnehmers aktiv ist. Beispielsweise sendet die Rechnereinheit (HSS) des Kommunikationsportals eine Antwort auf die Datenbankabfrage an die Gateway-Vermittlungsstelle (GMSC), wobei der Antwort eine Information über den abgesendeten Anruf des ersten Teilnehmers zugesandt wird (O-CSI = Originating Call Subscriber Information) zusammen mit einer IMRN (IMRN = IP Multimedia Routing Number) und dem Leistungsmerkmal, dass die Anrufweiterschaltung (CFu) des zweiten Teilnehmers aktiv ist,

In weiterer Ausgestaltung kann vorgesehen sein, dass die Gateway-Vermittlungsstelle eine IDP-Nachricht, beinhaltend die anfängliche IAM-Nachricht und das Leistungsmerkmal, dass die Anrufweiterschaltung des zweiten Teilnehmers aktiv ist, an einen Dienstesteuerknoten eines intelligenten Netzwerkes sendet, der überprüft, ob der zweite Teilnehmer im Kommunikationsportal aktuell angemeldet (online) ist und dass basierend auf diesem Überprüfungsschritt der Dienstesteuerknoten eine Initiierungsnachricht an die Gateway-Vermittlungsstelle zur Initiierung einer Kommunikation in das Kommunikationsnetzwerk des zweiten Teilnehmers sendet.

Beispielsweise sendet die Gateway-Vermittlungsstelle (GMSC) eine IDP-Nachricht (IDP = Initial Detection Part) beinhaltend die anfängliche IAM-Nachricht und das Leistungsmerkmal, dass die Anrufweiterschaltung (CFu) des zweiten Teilnehmers aktiv ist, an einen Dienstesteuerknoten eines intelligenten Netzwerkes (SCP-IN = Service Control Point-Intelligent Network), der überprüft, ob der zweite Teilnehmer im Kommunikationsportal aktuell angemeldet (online) ist. Falls nein, sendet der Dienstesteuerknoten eine Initiierungsnachricht an die Gateway-Vermittlungsstelle (GMSC) zur Initiierung eines Anrufs in das Mobilfunknetz des zweiten Teilnehmers. Falls ja, sendet der Dienstesteuerknoten eine Initiierungsnachricht zusammen mit einer Routing-Nummer IMRN (IMRN = IP Multimedia Routing Number), einer Prefix-Kennung (P1-Kennung) und der MSISDN an die Gateway-Vermittlungsstelle (GMSC) mit der Aufforderung zur Initiierung einer Nachricht zu einem MGCF (MGCF = Media Gateway Control Function).

Die Gateway-Vermittlungsstelle (GMSC) routet vorzugsweise die IAM-Nachricht zusammen mit der Routing-Nummer (IMRN), der Prefix-Kennung (P1-Kennung) und der MSISDN an das MGCF.

Das MGCF sendet vorzugsweise eine Einladungs-Nachricht (invite tel. +49...) mit der Routing-Nummer (IMRN), der Prefix-Kennung (P1-Kennung) und der MSISDN an die O-CSCF (O-CSCF = Originating-Call Session Control Functions) eines dem Kommunikationsnetzwerk, etwa dem Kommunikationsportal, zugeordneten IMS-Servers (IMS = IP Multimedia Subsystem). Durch die P1-Kennung erkennt der O-CSCF des IMS-Servers, dass der Anruf der vom ersten Teilnehmer ausgehende Anruf (originating call) ist.

Der O-CSCF kann nach Überprüfung der Einladungs-Nachricht durch eine Dienste-Kontroll-Einheit (service control) eine Einladungs-Nachricht (invite tel. +49...) mit der MSISDN an die Rechnereinheit des Kommunikationsnetzwerks senden.

Eine der Rechnereinheit des Kommunikationsnetzwerks zugeordnete Logikeinrichtung "originate service logic" kann die Einladungs-Nachricht überprüfen und anhand der Einladungs-Nachricht überprüfen, ob der zweite Teilnehmer über ein Internet basiertes Protokoll erreichbar ist.

Ist der zweite Teilnehmer über ein Internet basiertes Protokoll erreichbar, das heißt ist zweite Teilnehmer online, macht der IMS-Server zumindest zwei Stiche (call legs) auf, wobei ein Stich in das Mobilfunknetz des zweiten Teilnehmers die Prefix-Kennung (P1-Kennung) beibehält und der zumindest eine weitere Stich zu einem Internet basierten Endgerät des zweiten Teilnehmers eine neue Prefix-Kennung (P2-Kennung) erhält.

Die der Rechnereinheit des Kommunikationsnetzwerks zugeordnete Logikeinrichtung kann die Einladungs-Nachricht (invite tel. +49...) für die zumindest zwei Stiche zurück zum O-CSCF senden.

Der O-CSCF setzt vorzugsweise mittels der ENUM-Technik für den zumindest einen zweiten Stich die MSISDN des zweiten Teilnehmers aus der Einladungs-Nachricht in eine ENUM-Domain-Adresse des zweiten Teilnehmers, das heißt eine Internet-Adresse (SIP URI), um, und sendet über das SIP-Protokoll (SIP = Session Initiation Protocol) die Einladungs-Nachricht für die zumindest zwei Stiche an einen T-CSCF (T-CSCF = Terminating-Call Session Control Functions).

Der T-CSCF kann nach Überprüfung der Einladungs-Nachricht durch eine Dienste-Kontroll-Einheit (service control) die Einladungs-Nachricht für die zumindest zwei Stiche über das SIP-Protokoll an die Rechnereinheit des Kommunikationsnetzwerks senden, der eine Telefonverbindung zu einem einem Mobilfunknetz zugeordneten Endgerät des zweiten Teilnehmers (1. Stich) und parallel eine Telefonverbindung zu einem Internet basierten Endgerät des zweiten Teilnehmers (2. Stich) initiiert.

Ein Kern der vorliegenden Erfindung ist: ein Verfahren zum parallelen Bereitstellen eines Anrufs eines ersten Teilnehmers auf zumindest zwei unterschiedliche Endgeräte eines zweiten angerufenen Teilnehmers, wobei ein Endgerät des zweiten Teilnehmers einem Mobilfunknetz zugeordnet ist und zumindest ein zweites Endgeräte des zweiten Teilnehmers ein Internet basiertes Endgerät ist.

Der Dienstesteuerknoten des intelligenten Netzwerkes (SCP-IN) weiß vorzugsweise, wer aktuell mit seinem Internet fähigen Endgerät den Internetdienst des Kommunikationsnetzwerks nutzt, wer online ist. Dieses Wissen erhält er von der Rechnereinheit des Kommunikationsnetzwerks über die MAP-SRI. Zwischengeschaltet ist der G-MSC, der das Wissen nur an den Dienstesteuerknoten (SCP-IN) weiterleitet, wenn eine Anrufweiterschaltung des angerufenen Teilnehmers aktiv ist.

Der Dienstesteuerknoten (SCP-IN) sendet eine Initialisierungsaufforderung, aufweisend eine Routing-Nummer IMRN, ein Prefix-Kennung und die MSISDN des angerufenen Teilnehmers an das G-MSC. Der Dienstesteuerknoten (SCP-IN) überprüft beispielsweise die Berechtigung zur Nutzung des Weiterleitungsdienstes und stellt Zusatzdienste zur Verfügung; Der G-MSC stellt den Übergang ins Internet basierte Netzwerk (MGCF und CSCF) her.

Kern der erfindungsgemäßen Lösung ist insbesondere auch Folgendes: Eingehende Anrufe werden auf einen IN-Knoten geroutet. Der In-Knoten bekommt vorteilhaft den Online-Status des Client regelmäßig gepusht. Der IN-Knoten kann somit entscheiden, ob der Client online ist oder nicht. Ist der Client offline, wird der Anruf ohne Beteiligung des Clients und des IMS Systems im CS Netzwerk behandelt. Bei Ausfall der IMS Domäne ist somit keine Beeinträchtigung des Dienstes zu erwarten. Ist der Client hingegen online, leitet der IN Dienst über Media Gateways an einen IMS Applikationsserver weiter. Dieser eröffnet zwei Call Legs und alarmiert die beiden Endgeräte. Durch die vorherige IN-Behandlung des Anrufs kann gesteuert werden, dass der Anruf erforderliche weitere IN-Behandlung, zum Beispiel eine Zuhause-Logik, nach dem Eröffnen des Call Legs des IMS abarbeiten kann.Wird in der CS Domäne eine Call Forwarding Kondition ausgelöst, schickt die CS Domäne eine "Release Cause" zurück an den Applikationsserver. Dieser kann dann reagieren und den Stich entweder abbauen oder eine Umleitung auf ein Call forwarding Ziel zulassen.

Vorzugsweise kann vorgesehen sein, dass bei Abruf einer Meldung auf einem Endgerät eine automatische Löschung oder ein automatischer Rückruf der Meldung in den jeweils anderen Endgeräten möglich ist.

Die Erfindung wird nun anhand von Ausführungsbeispielen unter Bezugnahme auf die beiliegende Zeichnung näher erläutert. Es zeigen
- Figur 1: ein Ablaufdiagramm für die Registrierung in einem IMS Dienst;
- Figuren 2 und 3: Ablaufdiagramme zur Behandlung eingehender Anrufe;
- Figur 4: ein Ablaufdiagramm für den Fall, dass der Anrufer ein Teilnehmer des Kommunikationsnetzwerks vom Client aus ist, und der angerufene Teilnehmer ein Teilnehmer des Kommunikationsnetzwerks ist; und
- Figur 5: eine Ablaufdiagramm für die Handhabung der Call Forwardings.

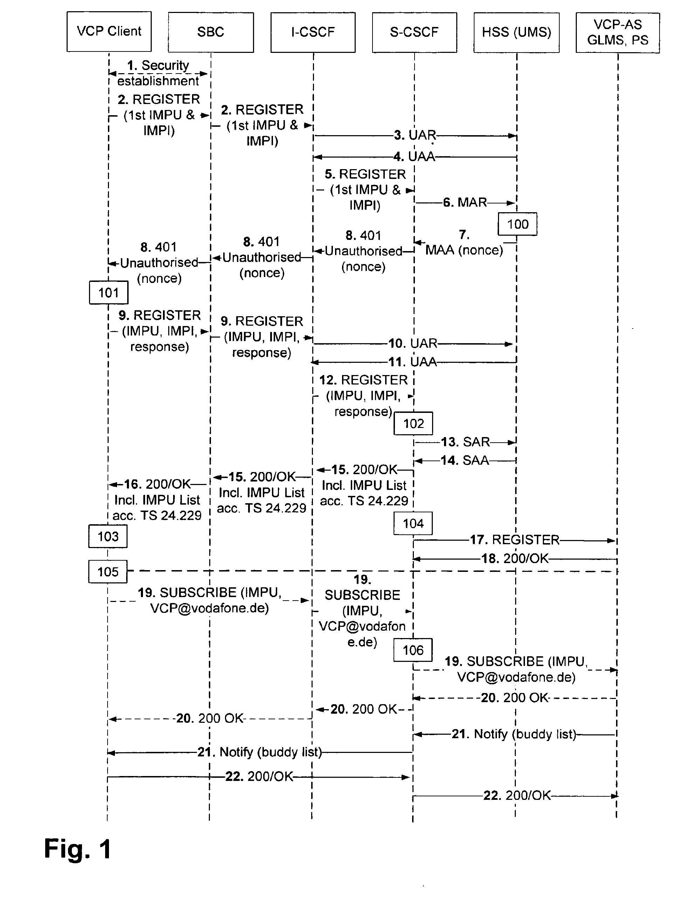

Ziel des in Figur 1 dargestellten Ausführungsbeispiels ist es, dass Anrufe und Nachrichten eines Nutzers beim kontaktierten Nutzer, beispielsweise bei der so genannten B-Party mit der MSISDN signalisiert werden. Gleichzeitig soll gewährleistet sein, dass sich der Nutzer von unterschiedlichen Clients einloggen kann, ohne die private Nutzeridentität kennen zu müssen. Kern dieser Lösung ist, dass der Nutzer als erste Öffentliche Identität eine MSISDN basierte SIP Adresse erhält und die Private Identität daraus berechnet wird.

Einem Nutzer in einem Kommunikationsnetzwerk, beispielsweise einem Kommunikationsportal, ist ein Endgerät in Form eines Mobiltelefons zugeordnet. Weiterhin ist dem Nutzer ein Internet basiertes Endgerät zugeordnet, beispielsweise ein Computer. Auf dem Computer kann ein bestimmtes Programm ablaufen, dass das erfindungsgemäße Verfahren durchführen kann, das im Folgenden als VCP Client bezeichnet ist.

Figur 1 beschreibt den Vorgang eines Login zu einem entsprechenden Service.

Der VCP Client ist vorteilhaft in einer Weise ausgelegt, dass er, gemäß den Formatierungsdefinitionen, die IMPU und IMPI von der beim Login eingegebenen Telefonnummer und/oder eMail-Adresse herleiten kann. Die IMPI und IMPU werden bei der weiteren SIP Signalisierung verwendet. Eine zweite IMPU, die beispielsweise Benutzernamen basiert ist, wird von einer REGISTER Antwort (200 OK), die in der IMPU Liste enthalten ist, hergeleitet. Die Registrierung wird durchgeführt unter Verwendung der ersten IMPU und IMPI. Dach Durchführung der IMS Registrierung, kann sich der Client bei dem entsprechenden Service anmelden.

Als Eingabe kann beispielsweise ein Nutzername, bestehend aus MSISDN und Passwort dienen. Der Client leitet die IMPI und IMPU aus dem Nutzernamen ab, beispielsweise IMPI = vcp_017212345678@vodafone.com oder erste IMPU sip:017212345678@vodafone.com. Als Eingabe kann beispielsweise auch ein Nutzername, bestehend aus eMail-Adresse und Passwort, dienen. Der Client leitet die IMPI und IMPU von dem Nutzernamen ab, beispielsweise IMPI = vcp_heinz-mustermann.abc.de@vodafone.com oder erste IMPU sip:heinz.mustermann.abc.de@vodafone.com.

Nachfolgend wird der Sequenzablauf beschrieben:
1. der VCP Client (nachfolgend auch Client genannt) und ein A-SBC führen einen TLS Handschlag aus. Es erfolgt insbesondere eine Sicherheitsetablierung.
2. Der Client sendet ein SIP REGISTER enthaltende 1^{st} IMPU, IMPI. A-SBC proxies REGISTER an den I-CSCF. Insbesondere schickt A-SBC in Vertretung REGISTER an I-CSFC.
3. Der I-CSCF leitet eine Nutzer-Authentifizierungs-Anfrage (UAR) an den HSS.
4. HSS antwortet mit dem Nutzer/Service Profil (UAA) an den I-CSCF.
5. Der I-CSCF weist den S-CSCF zu und proxies REGISTER zu dem zugeordneten S-CSCF. Insbesondere schickt I-CSFC in Vertretung REGISTER zu dem zugeordneten S-CSCF.
6. Der S-CSCF leitet eine Multimedia-Authentifietungs-Anfrage (MAR) an den HSS. Der HSS berechnet eine Authentifizierungs-Antwort 100. Insbesondere wird eine Kurzfassung einer Aufgabe (digest challenge) erzeugt und eine Kurzfassung einer Antwort (digest responde) kalkuliert.
7. Der HSS beantwortet die Multimedia-Authentifizierungs-Antwort (MAA) an den S-CSCF einschließlich der Nonce.
8. Der S-SCCF fordert den VCP Client mit der gesendeten Nonce "401 unauthorized" heraus.
9. Der Client berechnet eine Herausforderungsantwort 101 mit zuvor eingegebenen Passworten/Benutzernamen und leitet ein neues SIP-REGISTER an den I-CSCF.
10. Der I-CSCF leitet eine Nutzer-Authentifizierungs-Anfrage (UAR) an den HSS.
11. HSS antwortet mit dem Nutzer/Service Profil (UAA) an den I-CSCF.
12. Der I-CSCF weist den S-CSCF zu und proxies REGISTER zu dem zugeordneten S-CSCF. Der S-CSCF checkt die Nonce gegen die Herausforderungsantwort. Der Nutzer ist erfolgreich authentifiziert worden 102.
13. der S-CSCF leitet eine Server-Zuordnungs-Anfrage (SAR) des Nutzers an den HSS.
14. HSS antwortet mit den Nutzer/Service Profildaten (SAA) an den S-CSCF.
15. der S-CSCF sendet 200 OK zurück. Die Nachricht enthält eine Liste von allen IMPUs und welche IMPUs implizit registriert sind (die 1^{st} IMPU und die 2^{nd} IMPU sind implizit registriert)
16. Der Client bezieht alle registrierten IMPUs, die vom Nutzer genutzt werden können. Insbesondere bezieht der Client die erste IMPU und die zweite IMPU 103. Es erfolgt eine Berechnung der Filterkriterien 104.
17. Der S-CSCF verteilt die REGISTER Nachricht an alle relevanten SIP-AS, um alle Services über die erfolgreiche Registrierung zu informieren.
18. Der SIP-AS (SIP = Session Initiation Protocol) bestätigt die Service-Registrierung.

An diesem Punkt ist die IMS Registrierung beendet 105. Es kann die Service Subskription beginnen.

### Zusätzlich

19. Der Client initiiert eine SUBSCRIBE Nachricht, um den VCP-AS implizit zu informieren, wenn der Nutzer für den VCP Service einloggen will. Dabei erfolgt im S-CSCF ein Service-Punkt-Trigger 106.
20. Der VCP-AS bestätigt die Service Subskription, insbesondere mit 200 OK.
21. VCP-AS aktualisiert den Client mit "Buddy-Listen" und Präsentstatus.
22. Der VCP Client bestätigt, insbesondere mit 200 OK.
23. Ende des Ausführungsbeispiels

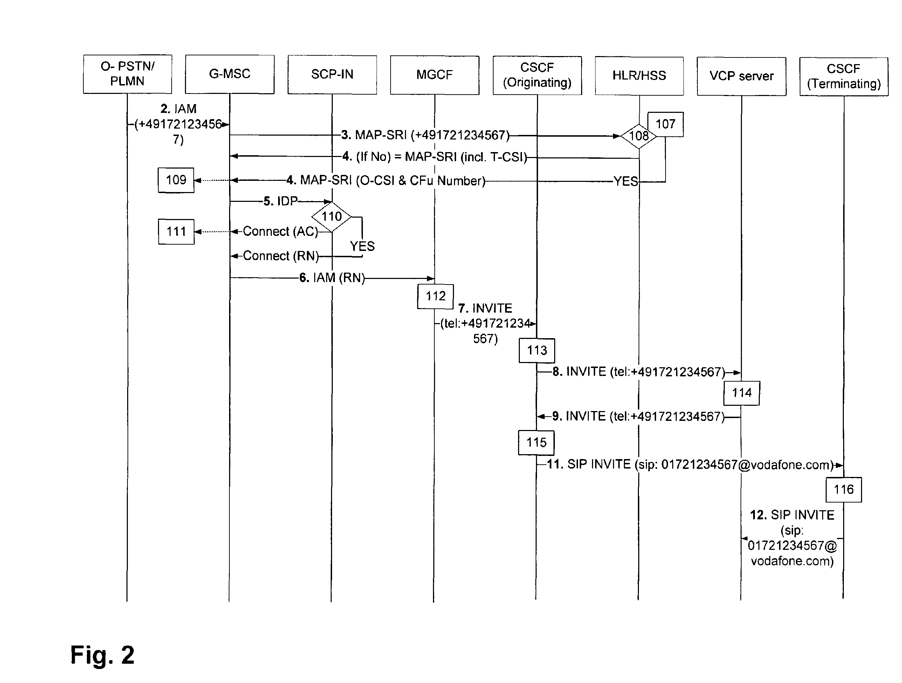

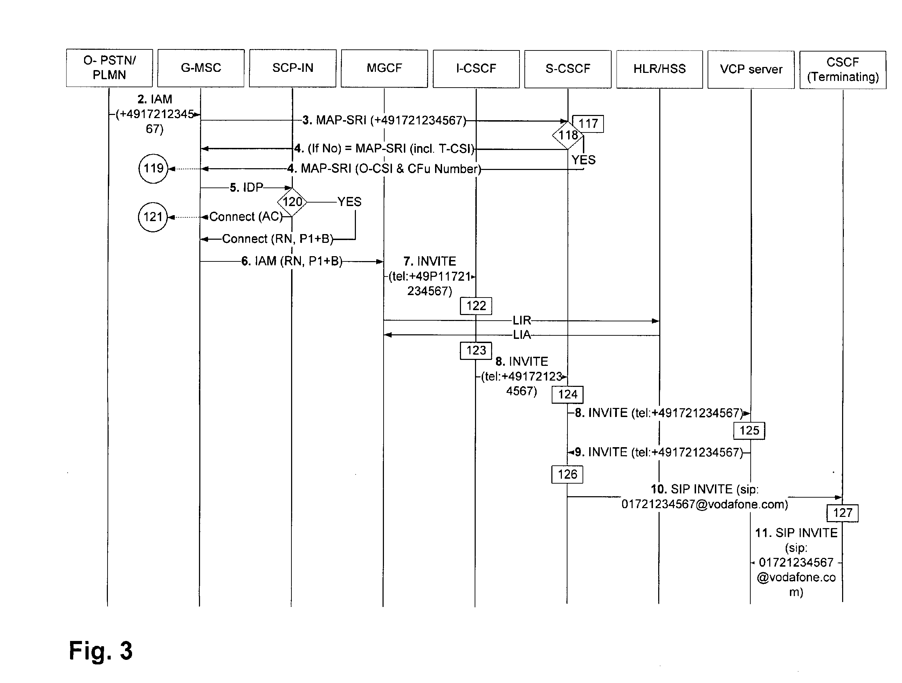

In den Figuren 2 und 3 sind Lösungen für eingehende Sprachanrufe und Videoanrufe dargestellt.

Zunächst wird das Ausführungsbeispiel gemäß Figur 2 beschrieben.
1. Der CS Nutzer wählt eine Telefonnummer des VCP Abonnenten.
2. Das Ursprungsnetzwerk sendet die IAM an den G-MSC mit der Telefonnummer.
3. Das G-MSC macht eine HLR-Anfrage mit der Telefonnummer, die in der MAP-SRI Nachricht bereitgestellt wurde.
4. Das Nutzerprofil wird abgerufen 107, es wird geprüft, ob CFu aktiv ist 108 und die T-CSI wird an das G-MSC geschickt. Gegebenenfalls erfolgt ein Setup von CFu 109.
5. Die IDP mit der anfänglichen IAM Information wird an das IN (SCP) geschickt und eine Routing-Nummer (RN) wird an das G-MSC geschickt, wenn der Nutzer ein VCP Kunde ist. Dabei wird geprüft, ob der VCP Nutzer registriert ist 110. Gegebenenfalls erfolgt ein Setup eines CS Rufs 111.
6. Die IAM mit RN wird vom G-MSC an das MGCF geschickt. Das MGCF muss die Original-Parameter an den Routen-Header hinzufügen 112.
7. MGCF sendet eine Einladung INVITE-Nachricht mit der Telefonnummer an die ausgehende CSCF.
8. Basierend auf "Service Kontrolle 113" in der ausgehenden (originating) CSCF (die ausgehende iFC) wird die Anfrage an den VCP Server geschickt um eine Service Logik zu erzeugen 114.
9. Nach Ausführung der Service Logik sendet der VCP Server (B2BUA) die Anfrage zurück an den CSCF.
10. der ausgehende CSCF führt eine ENUM Anfrage 115 durch, wobei die Telefonnummer in eine routbare SIP URL übersetz wird.
11. Nach Erhalt der SIP URL sendet der ausgehende CSCF SIP INVITE mit der SIP UTL an die Bestimmungs-CSCF.
12. Basierend auf "Service Kontrolle 116" in der Bestimmungs-CSCF (die Bestimmungs iFCs) wird die Anfrage an den VCP Server geschickt.

Für den Fall, dass der ausgehende Mobilfunknetz-Nutzer (PLMN) kein VCP-Nutzer (IMS) ist, wird das MGFC die Einladung direkt an die Bestimmungs-CSCF übertragen. In diesem Fall wird die "ausgehende Service Logik" (Beteiligung des VCP Servers) nicht stattfinden.

Das in Figur 3 dargestellte Ausführungsbeispiel stellt sich wie folgt dar.
1. Der CS Nutzer wählt eine Telefonnummer des VCP Abonnenten.
2. Das Ursprungsnetzwerk sendet die IAM an den G-MSC mit der Telefonnummer.
3. Das G-MSC macht eine HLR-Anfrage mit der Telefonnummer, die in der MAP-SRI Nachricht bereitgestellt wurde.
4. Das Nutzerprofil wird abgerufen 117, es wird geprüft, ob CFu aktiv ist 118 und die T-CSI wird an das G-MSC geschickt. Gegebenenfalls erfolgt ein Setup von CFu 119.
5. Die IDP mit der anfänglichen IAM Information wird an das IN (SCP) geschickt und eine Routing-Nummer (RN) plus P1 und B wird an das G-MSC geschickt, wenn der Nutzer ein VCP Kunde ist. Dabei wird geprüft, ob der VCP Nutzer registriert ist 120. Gegebenenfalls erfolgt ein Setup eines CS Rufs 121.
6. Die IAM mit RN, P1 und B wird vom G-MSC an das MGCF geschickt.
7. MGCF sendet eine Einladung INVITE-Nachricht mit der Telefonnummer an die I-CSCF. P1 wird vom I-CSCF analysiert verwendet, um den Anruf als entstehend 122 zu behandeln, und deshalb wird die HSS bezüglich des Standorts des A-Nutzers angefragt (in P-angeblicher-Identität). I-CSCF löscht P1, bevor der Anruf (INV) an S-CSCF weitergeleitet wird 123.
8. MGCF sendet eine Einladung INVITE-Nachricht mit der Telefonnummer an die S-CSCF. Basierend auf "Service Kontrolle 124" in der S-CSCF wird die Anfrage an den VCP Server geschickt um eine Service Logik 125 zu erzeugen.
9. Nach Ausführung der Service Logik sendet der VCP Server (B2BUA) die Anfrage zurück an den S-CSCF. Der S-CSCF führt eine ENUM Anfrage 126 durch, wobei die Telefonnummer in eine routbare SIP URL übersetzt wird.
10. Nach Erhalt der SIP URL sendet der S-CSCF SIP INVITE mit der SIP UTL an die Bestimmungs-CSCF.
11. Basierend auf "Service Kontrolle 127" in der Bestimmungs-CSCF (die Bestimmungs iFCs) wird die Anfrage an den VCP Server geschickt.

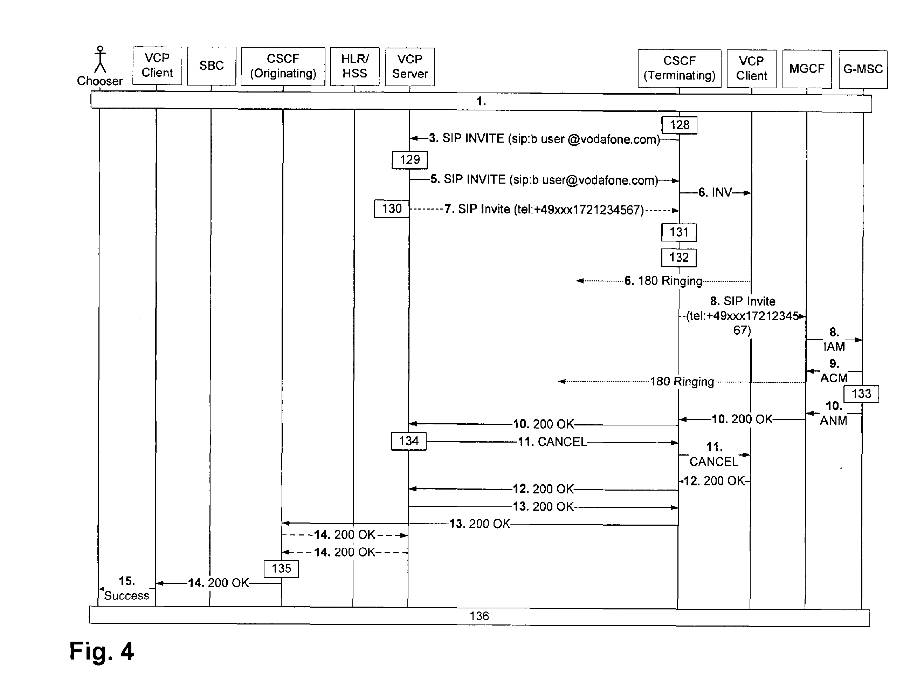

In Figur 4 ist ein Fall dargestellt, bei dem der Anrufer VCP Teilnehmer vom Client aus ist, und bei dem der angerufene Teilnehmer VCP Teilnehmer ist. Der Anruf wird direkt im IMS behandelt, ohne über die IN zu gehen. Ein VCP Nutzer macht einen VCP zu VCP (B Partei Mobilnummer) Anruf.
1. IMS ankommende Linie/Stich (Tel) Anfrage
2. Der Abonnent platziert eine Anruf-Anfrage, die die Nummer der B-Partei anzeigt.
3. Basierend auf "Service Kontrolle 128" in der Bestimmungs-CSCF (die Bestimmungs iFCs) wird die Anfrage an den VCP Server geschickt.
4. Der VCP Server (B2BUA) führt eine "Bestimmungs Service Logik 129" durch (Präsenz, Duales Klingeln ist an).
5. Der VCP Server sendet SIP INVITE mit der SIP URL (VCP Client) zu der Bestimmungs-CSCF (erste Linie).
6. Die Bestimmungs-CSCF sendet INVITE zu dem angerufenen Nutzer VCP Client via SBC (in der Figur nicht dargestellt). Der VCP Client sendet 180 Klingeln (Ringing) zu dem VCP Server (nicht im Detail dargestellt).
7. Da die Dual-Klingel (Dual Ringing) Option an ist, wird ein anderer SIP INVITE von dem VCP Server an die Bestimmungs-CSCF mit der Telefonnummer URL des Nutzers gesendet. Ein Prefix 130 wird durch den VCP Server zu der Identifikation der angerufenen Partei (Telefonnummer) hinzugefügt, im Beendungs-Trigger in der CS-Domäne (zweite Linie - 2. Stich) zu verhindern. Es sollte eine spezielle Prefixnummer durch den Kommunikationsserver hinzugefügt werden 130 um T-CSI am G-MSC zu unterbinden, um ein "Looping" zu verhindern.
8. Nachdem die ENUM Anfrage 131 (scheitert) und einer BGCF-Beteiligung 132, sendet die Bestimmungs-CSCF SIP INVITE an das MGCF und das MGCF sendet IAM an das CS Netzwerk durch das MSC-S.
9. Die CS-Domäne sendet eine ACM Nachricht an das MGCF, und das MGCF sendet 180 Klingeln (180 Ringing) an den VCP Server (nicht im Detail dargestellt).
10. Der Nutzer, insbesondere der CS Nutzer 133, antwortet an seinem mobilen Endgerät, beispielsweise seinem Mobiltelefon. G-MSC sendet eine ANM Nachricht an das MGCF und das MGCF sendet 200 OK um die CSFV zu beendet, welches das 200 OK an den VCP Server weiterleitet.
11. Es erfolgt die Abgabe (release) des CS Legs 134. Der VCP Server sendet eine CANCEL Anfrage an den VCP Client über die Beendigungs-CSCF, um die Anruf-Etablierung auf der ersten Linie zu stoppen.
12. Die Beendigungs-CSCF erhält eine 200/OK Antwort von dem VCP Client und sendet das 200/OK an den VCP Server (erste Linie geschlossen).
13. Der VCP Server sendet eine 200/OK Antwort zu der Beendigungs-CSCF, welche die 200/OK Antwort an die ausgehende CSCF (anfängliche Linie) sendet.
14. Die ausgehende S-CSCF leitet die 200/OK an den VCP Server begleitend ausgehende (originating) Services, welcher diese an die ausgehende S-CSCF zurücksendet. Dann sendet die ausgehende CSCF das 200/OK an den VCP Client des Anrufers. Dabei erfolgt eine Buchung (Accounting) 135.
15. Der VCP Client des Anrufers sendet eine Erfolgsnachricht an den Nutzer, der die Kommunikation beginnen kann. Der Anruf ist etabliert und es entsteht Nutzerverkehr (Call established /User Traffic) 136.
16. Ende des Ausführungsbeispiels.

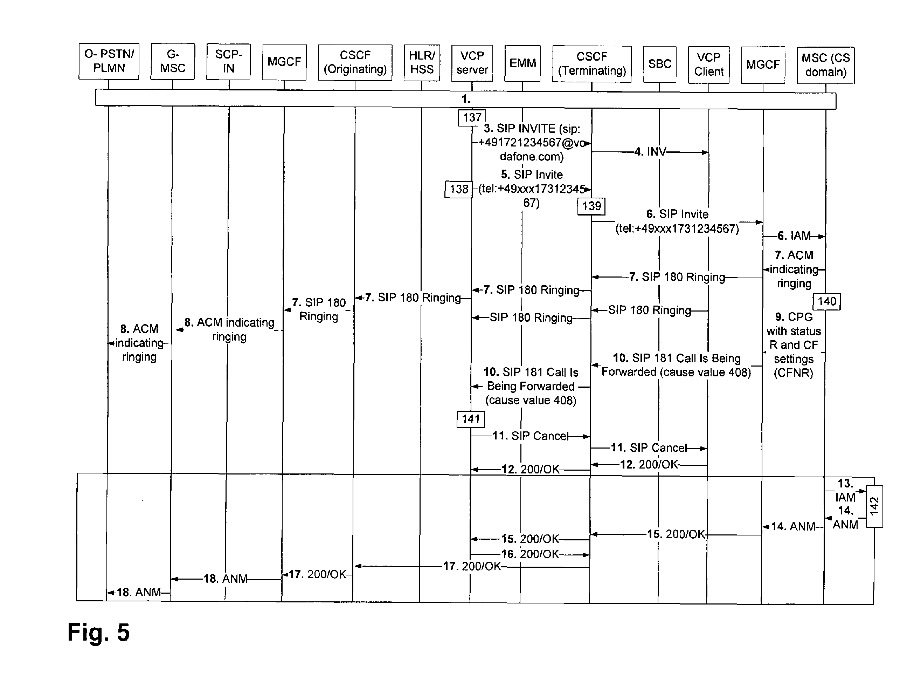

In Figur 5 schließlich ist ein Beispiel für das Handling von Rufweiterleitungen (Call forwardings) beschrieben.

Wenn der Client angeschlossen ist, wird ein Dual Klingeln (Dual ring) durchgeführt. Wenn beide Linien (legs) - zu GSM und zum Client - untätig sind und klingeln und nicht antworten, bis der GSM-Timer für "Keine Antwort" ausläuft und die GSM Linie kehrt zurück in "CF keine Antwort", dann soll die VCP Linie freigegeben werden und die Rufweiterleitung soll auf der GSM Linie einsetzen.
1. CS ankommende Linie/Stich Anfrage
2. Der VCP Server (B2BUA) führt eine "Bestimmungs Service Logik 137" durch (Präsenz, Duales Klingeln ist an).
3. Der VCP Server sendet SIP INVITE mit der SIP URL (VCP Client) zu der Bestimmungs-CSCF (erste Linie).
4. Die Bestimmungs-CSCF sendet INVITE zu dem angerufenen Nutzer VCP Client via SBC (in der Figur nicht dargestellt).
5. Ein anderer SIP INVITE wird von dem VCP Server an die Bestimmungs-CSCF mit der Telefonnummer URL des Nutzers gesendet. Ein Prefix 138 wird durch den VCP Server zu der Identifikation der angerufenen Partei (Telefonnummer) hinzugefügt, im Beendungs-Trigger in der CS-Domäne (zweite Linie - 2. Stich) zu verhindern. Es sollte eine spezielle Prefixnummer durch den Kommunikationsserver hinzugefügt werden 138 um T-CSI am G-MSC zu unterbinden, um ein "Looping" Rückruf zum IMS zu verhindern
6. Nachdem die ENUM Anfrage 139 (scheitert) und einer BGCF-Beteiligung, sendet die Bestimmungs-CSCF SIP INVITE an das MGCF und das MGCF sendet IAM an das CS Netzwerk durch das MSC-S.
7. Die CS-Domäne sendet eine ACM Nachricht in Form eines ACM anzeigenden Klingelns an das MGCF, und das MGCF sendet 180 Klingeln (180 Ringing) an den MGFC.
8. Das MGFC sendet ein AMC anzeigendes Klingeln an den G-PSTN/PLMN
9. Unter Verwendung eines Timers 140 werden CPG mit Status R und CF Einstellungen (CFNR) von der MSC (CS Domäne) an das MGCF geschickt
10. Vom MGFC wird ein SIP 181 Ruf zum VCP Server weitergeleitet, insbesondere mit einem Grund-Wert (cause value) 408. Wenn SIP 181 und Grund Wert 408, wird die VCP-Linie ausgelöst 141.
11. Der VCP Server sendet eine CANCEL Anfrage an den VCP Client über die Beendigungs-CSCF.
12. Die Beendigungs-CSCF erhält eine 200/OK Antwort von dem VCP Client und sendet das 200/OK an den VCP Server
   Wie im unteren Teil von Figur 5 dargestellt ist, soll CF auf der GSM Linie (leg) stattfinden,
13. Die MSC (CS Domaine) sendet IAM an einen CF 142.
14. Der CF 142 sendet eine ANM an das MGFC.
15. Das MGFC sendet 200/OK an den VCP Server.
16. Der VCP Server sendet 200/OK zurück an die Beendigungs-CSCF
17. Die Beendigungs-CSFC sendet 200/OK an das MGFC
18. Das MGFC sendet ein ANM an den G-PSTN/PLMN
19. Ende des Ausführungsbeispiels.

## Patentansprüche

1. Verfahren zur Erzeugung einer einheitlichen Nutzeridentität für die Kommunikation in einem Mobilfunknetz und im Internet, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist, **dadurch gekennzeichnet, dass** das Internet basierte zweite Endgerät unter derselben Identität erreichbar ist wie das erste Endgerät im Mobilfunknetz, so dass den Endgeräten eingehende Anrufe und Nachrichten mit derselben Identität signalisiert werden, und dass zur Bestimmung der Nutzeridentität aus einer dem Nutzer zugeordneten ersten Öffentlichen Identität (IMPU) eine Private Identität (IMPI) berechnet wird.

2. Verfahren nach Anspruch 1, **dadurch gekennzeichnet, dass** die Identität der Endgeräte auf einer dem Nutzer zugeordneten MSISDN basiert, und dass zur Bestimmung der Nutzeridentität aus einer dem Nutzer zugeordneten ersten Öffentlichen Identität (IMPU), die eine MSISDN basierte SIP Adresse darstellt, eine Private Identität (IMPI) berechnet wird.

3. Verfahren nach Anspruch 1 oder 2, **dadurch gekennzeichnet, dass** zur Bestimmung der Nutzeridentität aus einer dem Nutzer zugeordneten ersten Öffentlichen Identität (IMPU), die eine Benutzernamen basierte Öffentliche Identität darstellt, welche aus einem Register mit Öffentlichen Identitäten bezogen werden, eine Private Identität (IMPI) berechnet wird.

4. Verfahren zur Kommunikation in einem Kommunikationsnetzwerk, wobei einem Nutzer wenigstens zwei Endgeräte zugeordnet sind, wobei ein erstes Endgerät einem Mobilfunknetz zugeordnet ist und zumindest ein zweites Endgeräte ein Internet basiertes Endgerät ist, insbesondere unter Verwendung einer gemäß einem Verfahren nach einem der Ansprüche 1 bis 3 erzeugten einheitlichen Nutzeridentität, **gekennzeichnet durch** folgende Schritte:
Aus einem Kommunikationsnetz ruft ein erster Teilnehmer über sein Endgerät die Telefonnummer eines dem Kommunikationsnetzwerk zugeordneten Endgeräts eines zweiten Teilnehmers an;
Aus dem Kommunikationsnetz des ersten Teilnehmers wird eine IAM-Nachricht (IAM = Initial Adresse Message) mit der Nummer des ersten und
des zweiten Teilnehmers an eine Gateway-Vermittlungsstelle gesendet;
Die Gateway-Vermittlungsstelle sendet eine Datenbankabfrage an eine HLR-Datenbank des Kommunikationsnetzwerks des zweiten Teilnehmers, wobei in der Datenbankabfrage die Rufnummer des zweiten Teilnehmers angegeben ist;
Eine Rechnereinheit des Kommunikationsnetzwerks überprüft anhand der in der Datenbankabfrage übermittelten Rufnummer des zweiten Teilnehmers das Nutzerprofil des zweiten Teilnehmers, insbesondere für welche Netzwerkdienste dieser berechtigt ist, und ob eine Anrufweiterschaltung auf ein Endgerät des zweiten Teilnehmers aktiviert ist;
Basierend auf diesem Überprüfungsschritt sendet die Rechnereinheit des Kommunikationsnetzwerks eine Antwort auf die Datenbankabfrage an die Gateway-Vermittlungsstelle.

5. Verfahren nach Anspruch 4, **dadurch gekennzeichnet, dass** in dem Fall, dass im Überprüfungsschritt ermittelt wird, dass keine Anrufweiterschaltung auf ein Endgerät des zweiten Teilnehmers aktiviert ist, der Antwort eine abschließende Information zu dem Anruf des ersten Teilnehmers zugesandt wird, so dass der Anruf des ersten Teilnehmers in das Kommunikationsnetz des zweiten Teilnehmers weitergeleitet wird.

6. Verfahren nach Anspruch 4, **dadurch gekennzeichnet, dass** in dem Fall, dass im Überprüfungsschritt ermittelt wird, dass eine Anrufweiterschaltung auf ein Endgerät des zweiten Teilnehmers aktiviert ist, der Antwort eine Information über den abgesendeten Anruf des ersten Teilnehmers zugesandt wird, zusammen mit einer IMRN und dem Leistungsmerkmal, dass die Anrufweiterschaltung des zweiten Teilnehmers aktiv ist.

7. Verfahren nach Anspruch 6, **dadurch gekennzeichnet, dass** die Gateway-Vermittlungsstelle eine IDP-Nachricht, beinhaltend die anfängliche IAM-Nachricht und das Leistungsmerkmal, dass die Anrufweiterschaltung des zweiten Teilnehmers aktiv ist, an einen Dienstesteuerknoten eines intelligenten Netzwerkes sendet, der überprüft, ob der zweite Teilnehmer im Kommunikationsportal aktuell angemeldet (online) ist und dass basierend auf diesem Überprüfungsschritt der Dienstesteuerknoten eine Initiierungsnachricht an die Gateway-Vermittlungsstelle zur Initiierung einer Kommunikation in das Kommunikationsnetzwerk des zweiten Teilnehmers sendet.
